# FASCICULE DE BREVET EUROPEEN

(11) **EP 2 402 236 B1**
(45) Date de publication et mention de la délivrance du brevet: **27.08.2014**
(21) Numéro de dépôt: 11171830.0
(22) Date de dépôt: 29.06.2011
(51) Int. Cl.: B62D 33/037, E05B 83/02, E05B 63/22, E05C 1/08, E05C 19/14

(54) **Agencement de verrou pour ridelle rabattable**
Verriegelungsanordnung für herunterklappbare Ladebordwand
Lock for swing-down sideboard

(30) Priorité: 30.06.2010 FR 1002752
(43) Date de publication de la demande: 04.01.2012
(73) Titulaire: Pommier, 95310 Saint Ouen l'Aumone (FR)
(72) Inventeur: Preud'Homme, Thierry, 95450 Commeny (FR)
(74) Mandataire: Thinat, Michel

(56) Documents cités:
- EP-A1- 0 470 298
- EP-A2- 0 585 952
- EP-B1- 1 334 022
- DE-A1- 4 108 078
- DE-A1- 4 138 362

## Description

L'invention concerne un agencement de fermeture à verrou pour une ridelle rabattable, notamment d'un camion ou d'une remorque.

L'agencement de fermeture comprend une cuvette de boîtier et un dispositif de verrou comportant un crochet axialement solidaire d'un coulisseau déplaçable longitudinalement dans la cuvette, entre une position de verrouillage de la ridelle et une position dégagée dans laquelle la ridelle est rabattable, par pivotement d'un levier de poignée relié au coulisseau par un mécanisme à genouillère et articulé à une extrémité à la cuvette, la face de fond de la cuvette et le coulisseau étant adaptés pour que le coulisseau ne puisse pas sortir de la position de verrouillage lorsqu'une pression est exercée sur la face interne de la ridelle.

Les agencements de ce type présentent l'inconvénient majeur d'avoir une structure complexe due au fait qu'il est considéré comme étant nécessaire que le coulisseau soit pivotant.

EP-A-0585952 en dévoile un exemple selon le préambule de la revendication 1

L'invention est définie par la revendication 1 et a pour but de pallier cet inconvénient.

Pour atteindre ce but, l'agencement selon l'invention comprend des moyens adaptés pour pouvoir guider le coulisseau de façon qu'il se déplace de manière rectiligne dans un premier plan jusqu'à ce que le coulisseau bute sur un bossage formé au fond de la cuvette, lorsqu'une pression est exercée sur la face interne de la ridelle et que le coulisseau dépasse le bossage et change vers un second plan dans lequel il effectue un déplacement également de manière rectiligne lorsqu'une telle pression n'est pas exercée.

Le coulisseau effectue donc un déplacement rectiligne suivant un premier plan et puis suivant un second plan afin d'éviter un pivotement de l'ensemble coulisseau/crochet et les aménagements des pièces engagées que cela entraîne.

Ainsi, les moyens de guidage sont adaptés pour pouvoir guider le coulisseau de façon qu'il se déplace uniquement dans un premier plan, lorsqu'une pression est exercée sur la face interne de la ridelle, et qu'il se déplace successivement dans le premier plan et puis dans un second plan, lorsqu'aucune pression n'est exercée sur la face interne de la ridelle. Les deux plans s'étendent parallèlement à la face de fond de la cuvette, le second plan étant plus éloigné de la face de fond que le premier.

En ce qui concerne la réalisation des différents éléments de l'agencement de l'invention, plus particulièrement les aspects suivants sont à mentionner :
- le mécanisme à genouillère comprend une entretoise articulée à une extrémité au levier de poignée et à son autre extrémité au coulisseau, un ressort étant de préférence interposé entre les deux articulations ;
- la face de fond de la cuvette est pourvue d'un ou de deux bossages coopérant avec un épaulement du coulisseau pour empêcher le déplacement du coulisseau lorsqu'il est en position de verrouillage de la ridelle et lorsqu'une pression est exercée sur la face interne de cette dernière ;
- les moyens de guidage comprennent des lumières pratiquées dans les parois latérales de la cuvette et un axe d'articulation de l'entretoise au coulisseau engagé par ses extrémités dans les lumières et les lumières comportent chacune deux portions s'étendant dans le sens de déplacement du coulisseau et comportant de préférence une portion de transition, la seconde de ces deux portions, considérée dans le sens d'un déplacement du coulisseau vers la position dégagée, étant plus éloignée de la face de fond de la cuvette que la première afin de pouvoir maintenir le coulisseau dans le premier plan pour empêcher le déplacement du coulisseau lorsqu'il est en position de verrouillage de la ridelle et lorsqu'une pression est exercée sur la face interne de cette dernière, et pour pouvoir faire changer le coulisseau de plan et permettre ainsi au coulisseau de se déplacer jusqu'à la position dégagée lorsqu'il n'y a pas de pression sur la face interne de la ridelle ;

- l'axe d'articulation de l'entretoise au levier de poignée s'engage dans un évidement oblong de l'entretoise.
   D'autres caractéristiques et avantages de la présente invention ressortiront de la description ci-après d'un mode de réalisation de l'invention. La description est faite en référence aux dessins dont
   la figure 1 représente, en une vue de face, une partie d'une ridelle et un agencement de fermeture à verrou selon ce mode de réalisation de la présente invention ;
   la figure 2 représente une vue latérale sur l'agencement selon l'invention ;
   la figure 3 représente une vue en coupe suivant la ligne de coupe indiquée dans la figure 1, de l'agencement de l'invention ;
   les figures 4 à 6 représentent des détails selon les indications données respectivement sur la figure 2 et sur la figure 3 ;
   les figures 7, 9 et 11 sont des vues comparables à celle de la figure 2, à l'exception des positions du levier de poignée et des autres pièces mobiles ;
   les figures 8, 10 et 12 sont des vues comparables à celle de la figure 3 avec le levier de poignée et les autres pièces mobiles dans les mêmes positions respectives que sur les figures 7, 9 et 11.

Le mode de réalisation représenté sur les dessins s'applique à une ridelle R du plateau de chargement d'un camion porteur, d'une remorque ou d'une semi-remorque. La ridelle R présente une face externe R1 et une face interne R2 et est verrouillée moyennant l'agencement selon l'invention sur un montant cornier M.

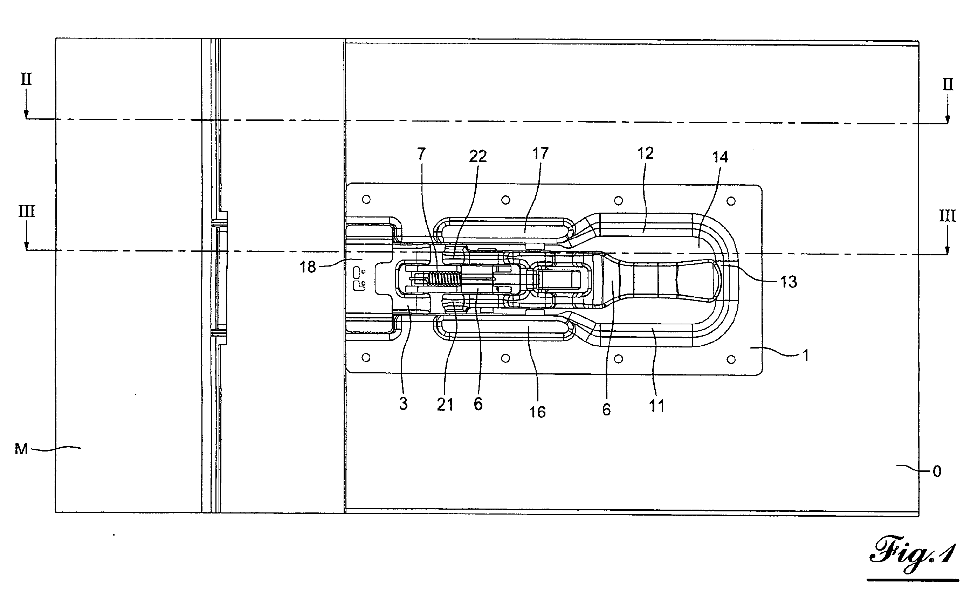

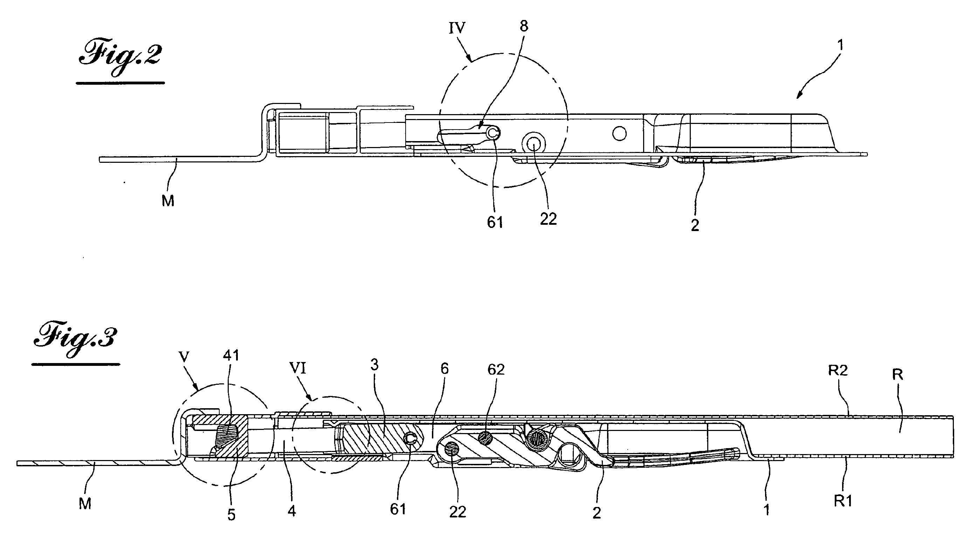

Les figures 1 à 6 représentent l'ensemble des éléments de l'agencement de l'invention en position de verrouillage du verrou.

L'agencement selon ce mode de réalisation de l'invention comprend une cuvette de boîtier 1 et un dispositif de verrou comportant un crochet 4 axialement solidaire d'un coulisseau 3 déplaçable longitudinalement dans la cuvette 1, entre une position de verrouillage de la ridelle R et une position dégagée dans laquelle la ridelle est rabattable, par pivotement d'un levier de poignée 2 relié au coulisseau 3 par un mécanisme à genouillère 6. Le levier de poignée 2 est articulé à une extrémité par des goupilles 21, 22 à la cuvette 1. Les goupilles 21, 22 sont engagées dans des parois latérales 11, 12 de la cuvette 1 qui présente par ailleurs également une paroi arrière 13 et une face de fond 14.

Le mécanisme à genouillère 6 est réalisé moyennant une entretoise 6 articulée à une extrémité 62, qui est pourvue d'un trou oblong 63, au levier de poignée 2 et à son autre extrémité 61 au coulisseau 3. Un ressort 7 est interposé entre les deux articulations de l'entretoise 6.

Afin que l'agencement de ce mode de réalisation de l'invention puisse remplir son rôle de sécurité, à savoir empêcher le déplacement du coulisseau 3 lorsqu'il est en position de verrouillage de la ridelle R et lorsqu'une pression est exercée sur la face interne R2 de cette dernière, la cuvette 1 comporte sur sa face de fond 14 un ou deux bossages 15 coopérant avec un épaulement 31 du coulisseau 3 et dans ses parois latérales 11, 12 des lumières 8 dans lesquelles sont engagées les extrémités de l'axe de l'articulation réalisée à l'extrémité 61 de l'entretoise 6. La cuvette 1 comprend enfin des rehaussements 16, 17 délimitant latéralement l'espace dans lequel le levier de poignée 2 évolue lors d'un actionnement du verrou de la ridelle R, ainsi qu'une plaque de couverture 18 délimitant l'espace dans lequel évolue le coulisseau 3 lorsqu'il passe sur le ou les bossages 15. Sans préjuger sur la présence d'un ou de deux bossages 15 ni sur leur forme, la suite de la description fait référence à un seul bossage 15.

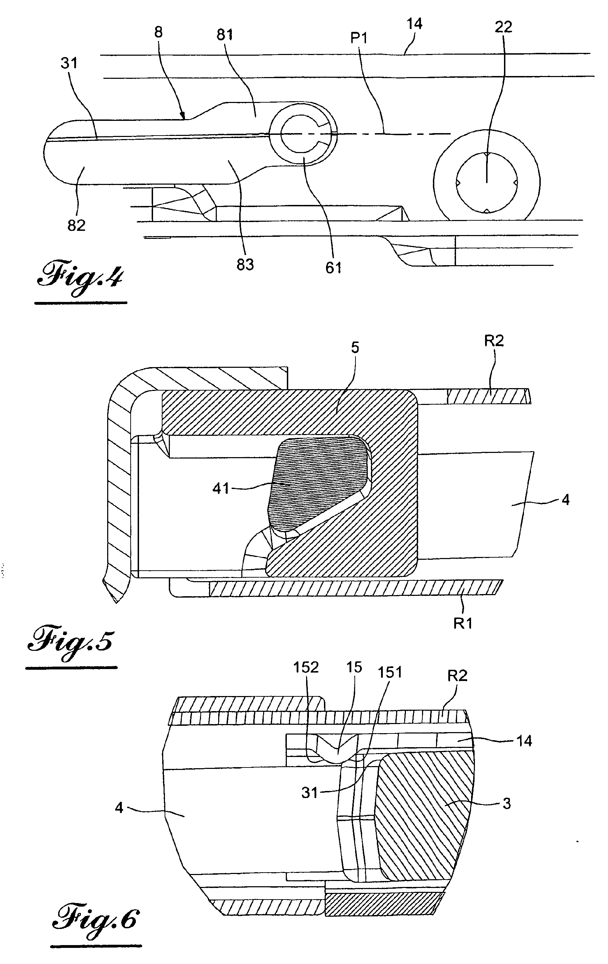

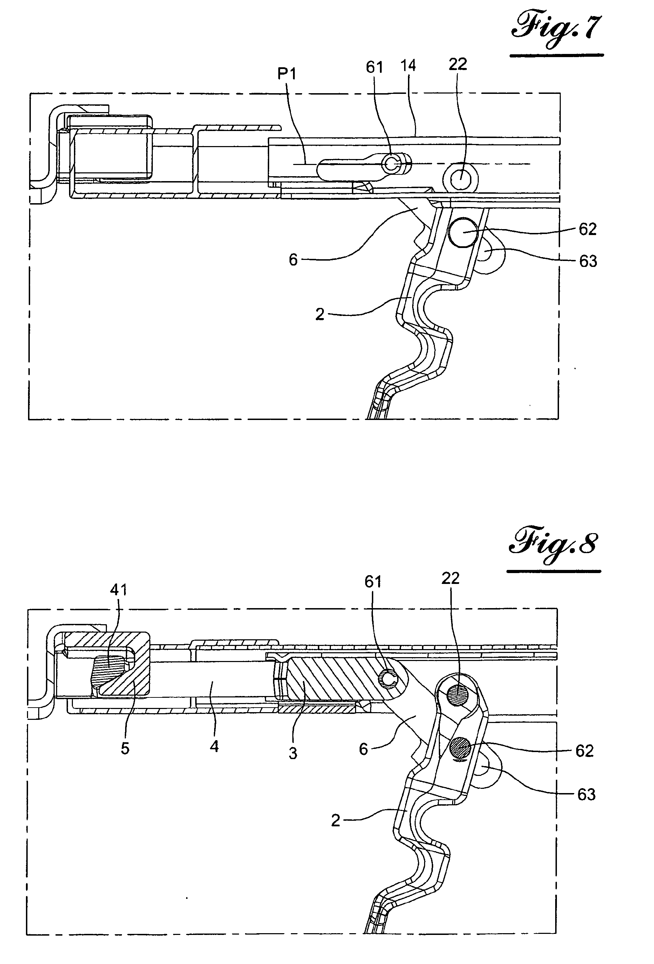

Comme représenté en détails sur la figure 4, les lumières 8 comportent deux portions 81, 82 s'étendant dans le sens de déplacement du coulisseau 3 et une portion de transition 83 reliant l'une à l'autre les deux portions 81, 82. La seconde portion 82, considérée dans le sens d'un déplacement du coulisseau vers la position dégagée, est plus éloignée de la face de fond 14 de la cuvette que la première 81 afin de permettre au coulisseau 3 de passer au-dessus du bossage 15 lorsqu'il n'y a pas de pression sur la face interne R2 de la ridelle, et afin d'interdire le passage lorsqu'une telle pression est exercée sur la face interne R2 de la ridelle. Pour ne pas nuire à la clarté de la figure 4, le coulisseau 3 est représenté sur cette figure par son joint de moulage ou d'estampage 31. Il en est de même sur les figures 7, 9 et 11 sur lesquelles la référence 31 n'a pas été portée pour ne pas surcharger lesdites figures.

Plus précisément, la conception des lumières 8 et les effets obtenus sont les suivants.

Lorsque la ridelle R est verrouillée sur le montant cornier M, la tête de crochet 41 du crochet 4 est engagée dans une gâche 5 solidaire du montant M. Le coulisseau 3 est en position arrière, ce qui est rendu visible sur la figure 4 par la position de l'articulation réalisée à l'extrémité 61 de l'entretoise 6. Cette articulation est située à l'extrémité droite de la lumière 8 et sur un plan P1 dans lequel elle évoluera ensuite et qui s'étend parallèlement à la face de fond 14 de la cuvette 1.

Dans cette position, l'épaulement 31 du coulisseau 3 est encore éloigné du bossage 15 formé avec deux parties en pente 151, 152 dans la face de fond 14 de la cuvette 1.

Les figures 7 et 8 représentent, respectivement en vue latérale et en coupe, une tentative de déverrouillage du verrou de la ridelle R, lorsqu'une pression est exercée sur la face interne R2 de la ridelle par une charge placée sur le plateau du camion ou de la remorque. Sous l'effet de la pression, le crochet 4 est mis en appui sur la face de fond 14 de la cuvette 1, puisque l'axe 61 est retenu sans jeu transversal, et la tentative de déplacement du coulisseau 3 avec le crochet 4 se termine très vite par l'appui de l'épaulement 31 du coulisseau 3 sur le bossage 15. Puisque le crochet 4, et avec lui le coulisseau 3, est plaqué sur la face de fond 14, le coulisseau ne peut pas monter la pente 151 du bossage 15, ce qui empêche le déplacement du coulisseau 3 et ainsi le déverrouillage du verrou de la ridelle R.

On notera plus particulièrement que, grâce aux dispositions de l'invention, le coulisseau 3 est guidé par la forme de la lumière 8 de façon qu'il évolue, pendant le peu de déplacement qu'il puisse effectuer jusqu'à buter sur le bossage 15, uniquement sur le plan P1 et qu'il n'y a notamment pas de pivotement du coulisseau 3 au moment où il bute sur le bossage 15. Le coulisseau 3 se déplace donc uniquement de manière rectiligne.

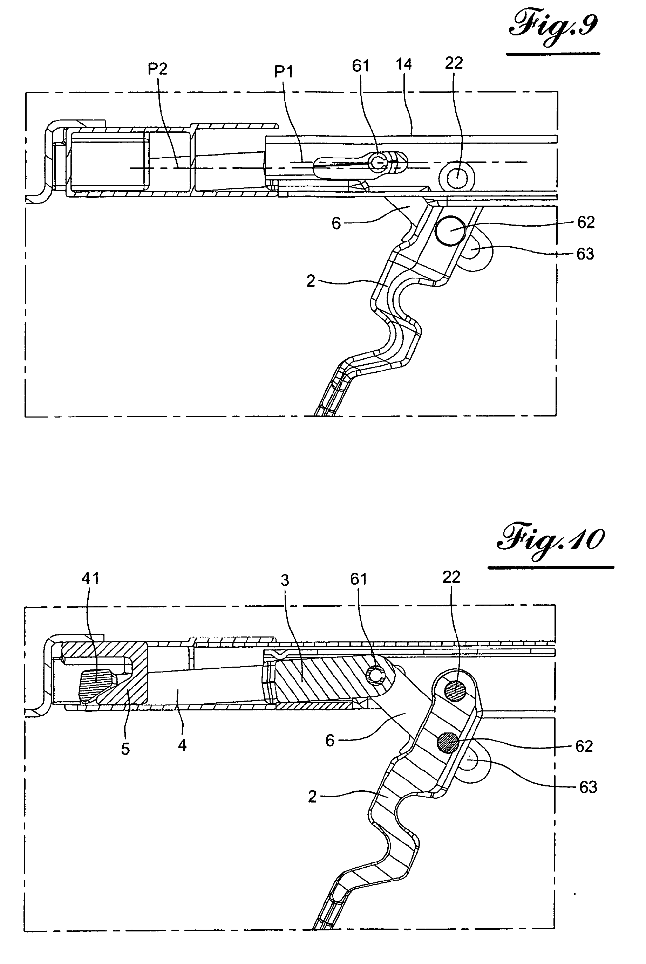

Les figures 9 et 10 représentent, respectivement en vue latérale et en coupe, une tentative de déverrouillage du verrou de la ridelle R, lorsqu'aucune pression n'est plus exercée sur la face interne R2 de la ridelle. Puisque le crochet 4 n'est pas maintenu en appui sur la face de fond 14 de la cuvette 1, le coulisseau 3 peut surmonter le bossage 15 et le dépasser. En même temps, l'articulation de l'extrémité 61 entre dans la portion de transition 83 de la lumière 8 pour faire changer le coulisseau 3 de plan d'évolution. Ladite articulation, et avec elle le coulisseau 3, change du plan P1 vers le plan P2. C'est uniquement pendant cette phase de transition qu'il se peut que le coulisseau 3 soit pivoté au lieu de continuer d'évoluer parallèlement à la face de fond 14. Un tel pivotement passager est visible sur la figure 10.

Notons à ce sujet que la pente de la gâche 5, la pente 151 du bossage 15, l'orientation de la portion oblique de transition 83 de la lumière 8 et la distance des deux plans P1, P2 l'un de l'autre peuvent être déterminés de manière à obtenir un changement de plan du coulisseau 3 du plan P1 vers le plan P2, et aussi inversement du plan P2 vers le plan P1, sans pivotement du coulisseau 3 ou pour le moins avec un pivotement nettement moindre que celui représenté sur la figure 10.

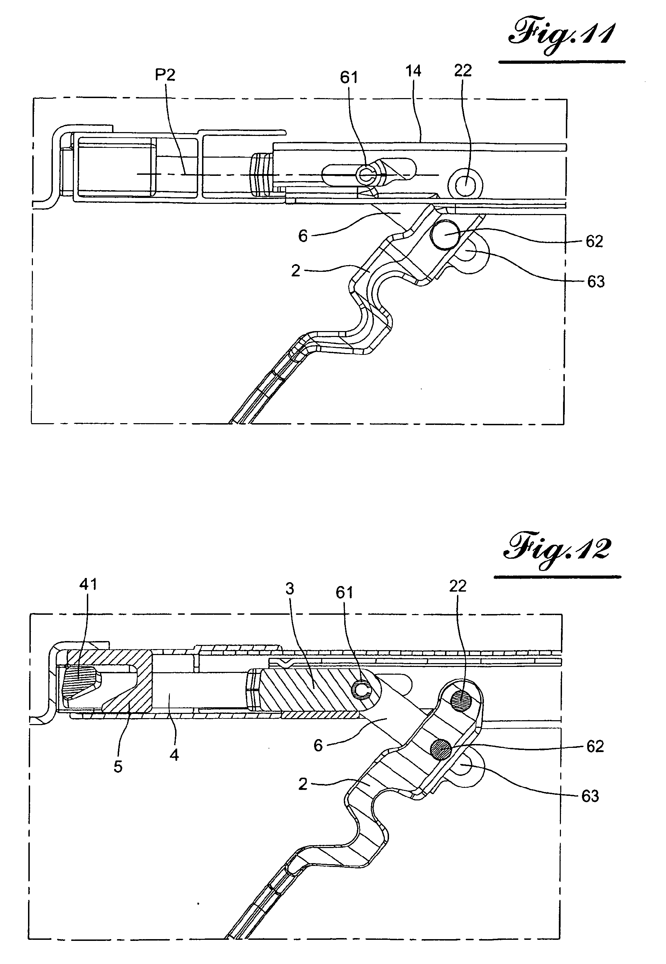

Les figures 11 et 12 représentent, respectivement en vue latérale et en coupe, le déplacement du coulisseau 3 lors d'un déverrouillage du verrou de la ridelle R. L'épaulement 31 du coulisseau 3 ayant dépassé le bossage 15, le coulisseau 3 continue son déplacement vers la position dégagée qui permet au crochet 4 de sortir de la gâche 5 et ainsi de rabattre la ridelle R. Pendant cette seconde partie de son déplacement, le coulisseau 3 évolue uniquement dans le plan P2 et cela de façon rectiligne.

## Revendications

1. Agencement de fermeture à verrou pour ridelle (R) rabattable, notamment de camion, du type comprenant une cuvette de boîtier (1) avec une face de fond (14) et des parois latérales (11, 12), et un dispositif de verrou comportant un crochet (4) axialement solidaire d'un coulisseau (3) déplaçable longitudinalement dans la cuvette (1), entre une position de verrouillage de la ridelle (R) et une position dégagée dans laquelle la ridelle est rabattable, par pivotement d'un levier de poignée (2) relié au coulisseau (3) par une entretoise (6) d'un mécanisme à genouillère et articulé à une extrémité (22) à la cuvette (1), la cuvette (1) comportant, sur sa face de fond (14), au moins un bossage (15) coopérant avec un épaulement (31) du coulisseau (3) et les parois latérales (11, 12) étant pourvues de lumières (8) dans lesquelles est engagé, par ses deux extrémités opposés, un axe d'articulation (61) de l'entretoise (6) par lequel cette dernière est articulée au coulisseau (3), les lumières (8) comportant une première portion (81), considérée dans un sens de déplacement du coulisseau (3) vers la position dégagée, s'étendant dans un premier plan (P1) parallèle à la face de fond (14) de la cuvette (1) et étant adaptée pour guider le coulisseau (3) de manière rectiligne jusqu'à ce que l'épaulement (31) du coulisseau (3) bute sur le bossage (15) pour empêcher le déplacement du coulisseau (3) lorsqu'il est en position de verrouillage de la ridelle et lorsqu'une pression est exercée sur une face interne (R2) de la ridelle (R),
**caractérisé en ce que**
les lumières (8) comportent chacune en outre une seconde portion (82) s'étendant dans un second plan (P2) également parallèle à la face de fond (14) de la cuvette (1) et plus éloigné de cette dernière (14) que le premier plan (P1) et étant adaptée pour guider le coulisseau (3), après son changement du premier plan (P1) vers le second plan (P2) lorsqu'aucune pression n'est exercée sur la face interne (R2) de la ridelle (R), de manière rectiligne jusqu'à la position dégagée, et **en ce que** l'axe d'articulation (62) de l'entretoise (6) au levier de poignée (2) s'engage dans un évidement oblong (63) de l'entretoise (6)

2. Agencement selon la revendication 1, **caractérisé en ce que** chacune des lumières (8) comprend une portion de transition (83) permettant au coulisseau (3) un changement du premier plan (P1) vers le second plan (P2) et inversement du second plan (P2) vers le premier plan (P1).

3. Agencement selon la revendication 1 ou 2, **caractérisé en ce que** l'entretoise (6) est articulée à l'autre extrémité (62) au levier de poignée (2) avec interposition d'un ressort (7) entre les deux articulations (61, 62).

4. Agencement selon l'une quelconque des revendications 1 à 3, **caractérisé en ce que** la cuvette (1) comprend des rehaussements (16, 17) délimitant latéralement l'espace dans lequel le levier de poignée évolue lors d'un actionnement du verrou.

5. Agencement selon l'une quelconque des revendications 1 à 4, **caractérisé en ce que** la cuvette (1) comprend une plaque de couverture (18) délimitant l'espace dans lequel évolue le coulisseau (3) lorsqu'il passe sur le ou les bossages (15).

## Patentansprüche

1. Verschlussanordnung mit Riegel für herunterklappbare Ladebordwand (R), insbesondere eines Lastkraftwagens, der Bauart, die eine Gehäusewanne (1) mit einer Bodenseite (14) und Seitenwänden (11, 12) und eine Riegelvorrichtung umfasst, die einen Haken (4) aufweist, der mit einem längs in der Wanne (1) zwischen einer Verriegelungsposition der Ladebordwand (R) und einer Freigabeposition, in der die Ladebordwand durch Schwenken eines mit dem Schieber (3) mittels eines Querriegels (6) eines Kniegelenkmechanismus verbundenen und an einem Ende (22) an die Wanne (1) angelenkten Griffhebels (2) herunterklappbar ist, verlagerbaren Schieber (3) axial verbunden ist, wobei die Wanne (1) auf ihrer Bodenseite (14) mindestens eine Wulst (15) aufweist, die mit einem Absatz (31) des Schiebers (3) zusammenarbeitet, und die Seitenwände (11, 12) mit Öffnungen (8) ausgestattet sind, in die mittels ihrer zwei gegenüberliegenden Seiten eine Gelenkachse des Querriegels (6), mittels derer der Querriegel an dem Schieber (3) angelenkt ist, eingreift, wobei die Öffnungen (8) einen ersten Abschnitt (81) aufweisen, der sich, betrachtet in einer Verlagerungsrichtung des Schiebers (3) in die Freigabeposition, in einer ersten Ebene (P1) parallel zur Bodenseite (14) der Wanne (1) erstreckt und ausgebildet ist, um den Schieber (3) gerade zu lenken, bis der Absatz (31) des Schiebers (3) an der Wulst (15) anschlägt, um die Verlagerung des Schiebers (3) zu verhindern, wenn er in Verriegelungsposition der Ladebordwand ist und wenn ein Druck auf eine Innenseite (R2) der Ladebordwand (R) ausgeübt wird,
**dadurch gekennzeichnet, dass** die Öffnungen (8) ferner jeweils einen zweiten Abschnitt (82) aufweisen, der sich in einer zweiten Ebene (P2) ebenfalls parallel zur Bodenseite (14) der Wanne (1) und beabstandeter von dieser (14) als die erste Ebene (P1) erstreckt und ausgebildet ist, um den Schieber (3), wenn kein Druck auf die Innenseite (R2) der Ladebordwand (R) ausgeübt wird, nach seinem Wechsel aus der ersten Ebene (P1) in die zweite (P2) Ebene gerade bis in die Freigabeposition zu führen, und dass die Gelenkachse (62) des Querriegels (6) am Griffhebel (2) in eine längliche Aussparung (63) des Querriegels (6) eingreift.

2. Anordnung nach Anspruch 1, **dadurch gekennzeichnet, dass** jede der Öffnungen (8) einen Übergangsabschnitt (83) aufweist, der dem Schieber (3) einen Wechsel aus der ersten Ebene (P1) in die zweite Ebene (P2) und zurück aus der zweiten Ebene (P2) in die erste Ebene (P1) erlaubt.

3. Anordnung nach Anspruch 1 oder 2, **dadurch gekennzeichnet, dass** der Querriegel (6) am anderen Ende (62) am Griffhebel (2) mit Zwischenstellung einer Feder (7) zwischen den zwei Gelenken (61, 62) angelenkt ist.

4. Anordnung nach einem der Ansprüche 1 bis 3, **dadurch gekennzeichnet, dass** die Wanne (1) Erhöhungen (16, 17) umfasst, die seitlich den Raum begrenzen, in dem sich der Griffhebel bei einer Betätigung des Riegels bewegt.

5. Anordnung nach einem der Ansprüche 1 bis 4, **dadurch gekennzeichnet, dass** die Wanne (1) eine Abdeckplatte (18) umfasst, die den Raum begrenzt, in dem sich der Schieber (3) bewegt, wenn er über die Wulst (Wülste) (15) läuft.

## Claims

1. A closure arrangement for a swing-down sideboard (R), in particular for a truck, of the type comprising a case basin (1) with a bottom face (14) and side walls (11, 12), and a lock device including a hook (4) axially secured to a slide (3) moveable longitudinally in the basin (1), between a locked position of the sideboard (R) and a released position in which the sideboard can be swung down, by pivoting a handle lever (2) connected to the slide (3) by a spacer (6) of a toggle mechanism and articulated at one end (22) to the basin (1), the basin (1) including, on its bottom face (14), at least one boss (15) cooperating with a shoulder (31) of the slide (3) and the side walls (11, 12) being provided with lumens (8) in which is engaged, by its two opposite ends, a hinge pin (61) of the spacer (6) by which the latter is articulated to the slide (3), the lumens (8) including a first portion (81), considered in a movement direction of the slide (3) toward the released position, extending in a first plane (P1) parallel to the bottom face (14) of the basin (1) and being suitable for guiding the slide (3) rectilinearly until the shoulder (31) of the slide (3) abuts on the boss (15) to stop the slide (3) when it is in the locked position of the sideboard and when pressure is exerted on an inner face (R2) of the sideboard (R),
**characterized in that** the lumens (8) each further include a second portion (82) extending in a second plane (P2) also parallel to the bottom face (14) of the basin (1) and further from the latter (14) than the first plane (P1) and being suitable for guiding the slide (3), after its change from the first plane (P1) to the second plane (P2) when no pressure is exerted on the inner face (R2) of the sideboard (R), rectilinearly to the released position,
and **in that** the hinge pin (62) of the spacer (6) at the handle lever (2) engages in an oblong recess (63) of the spacer (6).

2. The arrangement according to claim 1, **characterized in that** each of the lumens (8) comprises a transition portion (83) allowing the slide (3) to change from the first plane (P1) to the second plane (P2) and conversely, from the second plane (P2) to the first plane (P1).

3. The arrangement according to claim 1 or 2, **characterized in that** the spacer (6) is articulated to the other end (62) of the handle lever (2) with a spring (7) being interposed between the two articulations (61, 62).

4. The arrangement according to any one of claims 1 to 3, **characterized in that** the basin (1) comprises elevations (16, 17) laterally delimiting the space in which the handle lever moves during actuation of the lock.

5. The arrangement according to any one of claims 1 to 4, **characterized in that** the basin (1) comprises a covering plate (18) delimiting the space in which the slide (3) moves when it passes over the boss(es) (15).
